# EUROPEAN PATENT APPLICATION

(11) **EP 4 611 229 A1**
(43) Date of publication of application: **03.09.2025**
(21) Application number: 25154993.7
(22) Date of filing: 30.01.2025
(51) Int. Cl.: H02K 5/04, H02K 5/15, H02K 5/22, H02K 7/00, H02K 11/225, H02K 11/25

(54) **VEHICLE DRIVE SYSTEM**

(30) Priority: 01.03.2024 JP 2024031394
(71) Applicant: MAZDA MOTOR CORPORATION, Hiroshima 730-8670 (JP)
(72) Inventor: Imura, Arashi, Aki-gun, Hiroshima 730-8670 (JP); Nakano, Atsushi, Aki-gun, Hiroshima 730-8670 (JP)
(74) Representative: Laufhütte, Dieter

(57) **Abstract**

A vehicle drive system including a motor, a temperature sensor, and a resolver includes a motor housing accommodating the motor, the temperature sensor and the resolver, and being open at one side in a motor axial direction, a cover member covering the opening, and temperature sensor and resolver harnesses connected in a first end part to the temperature sensor and the resolver, respectively. The cover member has a window for passing the temperature sensor harness. A temperature sensor connector connectable to a first external harness is attached to the cover member to penetrate a part thereof separated from the window. The temperature sensor connector is connected to a second end part of the temperature sensor harness. A resolver connector connectable to a second external harness is attached to and penetrates the motor housing. The resolver connector is connected to a second end part of the resolver harness.

## Description

The present disclosure relates to a vehicle drive system, which is installed in a vehicle.

For example, JP7083298B discloses a vehicle provided with a motor for driving wheels. This motor is an in-wheel motor built into a wheel hub, provided with a hollow shaft that rotates with a rotor, and a sensor that detects a rotational position of the rotor. A harness of the sensor is inserted through the hollow shaft and extends to the outside of the motor to be connected to a control board.

Meanwhile, an internal temperature state and a rotational state of the motor are used as part of information when controlling the motor. In order to detect the internal temperature of the motor as accurately as possible, it is necessary to place a temperature sensor inside a housing accommodating the motor. Placing the temperature sensor inside the housing allows the sensor to be protected from an external environment, such as water and dust, which is thought to reduce issues like deterioration over time. Further, it is desired to place a resolver for detecting the rotational state of the motor inside the housing, in order to protect the resolver from the external environment.

When the temperature sensor and the resolver are placed inside the housing, harnesses extending from the temperature sensor and the resolver needs to be routed outside the housing. In this regard, JP7083298B routes the harness of the sensor through the hollow shaft to extend it outside. However, in a case where it is difficult to adopt such a hollow shaft structure, how to route the harness outside the housing becomes an issue. In particular, since the temperature sensor and the resolver are positioned at different locations, it may be challenging to adopt a layout where both the harness of the temperature sensor and the harness of the resolver pass through the hollow shaft as described in JP7083298B.

The present disclosure is made in view of the above situations, and aims to output detection signals from a temperature sensor and a resolver to the outside of a housing, without adopting a hollow shaft structure, while avoiding localized concentration of a plurality of harnesses and facilitating a layout.

A vehicle drive system including a motor, a temperature sensor configured to detect a temperature state of the motor, and a resolver configured to detect a rotational state of the motor is provided, which includes a motor housing accommodating the motor, the temperature sensor, and the resolver, and being open at one side in an axial direction of a motor rotation shaft, a cover member covering the opening of the motor housing from the one side, a temperature sensor harness connected at a first end part to the temperature sensor, and a resolver harness connected at a first end part to the resolver. The cover member has a window through which the temperature sensor harness passes, and a temperature sensor connector connectable to a first external harness is attached to the cover member to penetrate a part of the cover member separated from the window. The temperature sensor connector is connected to a second end part of the temperature sensor harness. A resolver connector connectable to a second external harness is attached to the motor housing to penetrate the motor housing. The resolver connector is connected to a second end part of the resolver harness.

The cover member may include a cover-side vertical wall part extending in a radial direction of the motor rotation shaft to cover the opening of the motor housing, and a cover-side circumferential wall part projecting in the axial direction of the motor rotation shaft from a circumferential edge portion of the cover-side vertical wall part to extend annularly. The window may be formed in the cover-side vertical wall part. The temperature sensor connector may be attached to the cover-side circumferential wall part to penetrate the cover-side circumferential wall part.

The temperature sensor and the resolver may be disposed away from each other in the axial direction of the motor rotation shaft.

The temperature sensor may be accommodated inside the motor housing on a side closer to the cover-side vertical wall part.

The resolver may be accommodated inside the motor housing on an opposite side from the cover-side vertical wall part.

The motor housing may have a housing-side vertical wall part extending in the radial direction of the motor rotation shaft, and a housing-side circumferential wall part projecting in the axial direction of the motor rotation shaft from a circumferential edge portion of the housing-side vertical wall part to extend annularly, and coupled to the cover member. The resolver connector may be attached to the housing-side circumferential wall part to penetrate the housing-side circumferential wall part.

A side of the temperature sensor connector to which the first external harness is connected may face the same direction as a side of the resolver connector to which the second external harness is connected.

### BRIEF DESCRIPTION OF DRAWINGS

Fig. 1 is a frontal perspective view of a vehicle drive system.
Fig. 2 is a front view of the vehicle drive system.
Fig. 3 is a schematic cross-sectional view taken along a line III-III in Fig. 2.
Fig. 4 is an upper-left perspective view illustrating a separated state of a right cover member and a motor housing.

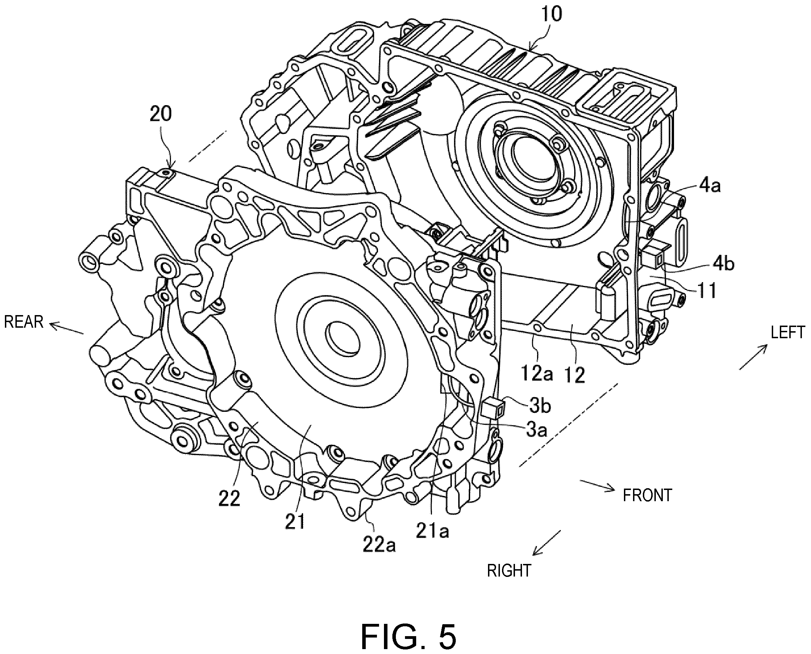

Fig. 5 is an upper-right perspective view illustrating the separated state of the right cover member and the motor housing.

Hereinafter, one embodiment of the present disclosure will be described in detail with reference to the accompanying drawings. Note that the following description of this embodiment is merely illustrative in nature and is not intended to limit the present disclosure, its applications, or uses.

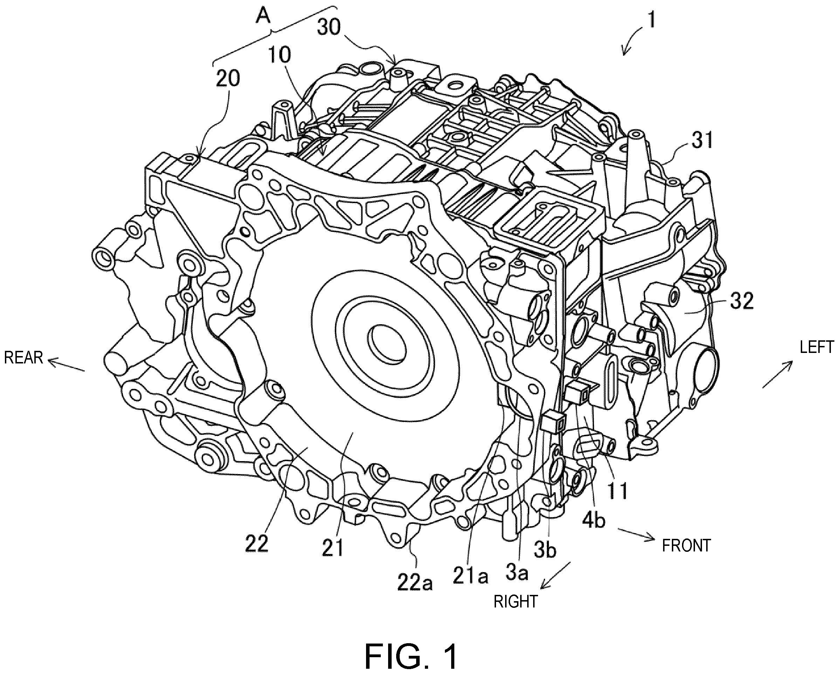

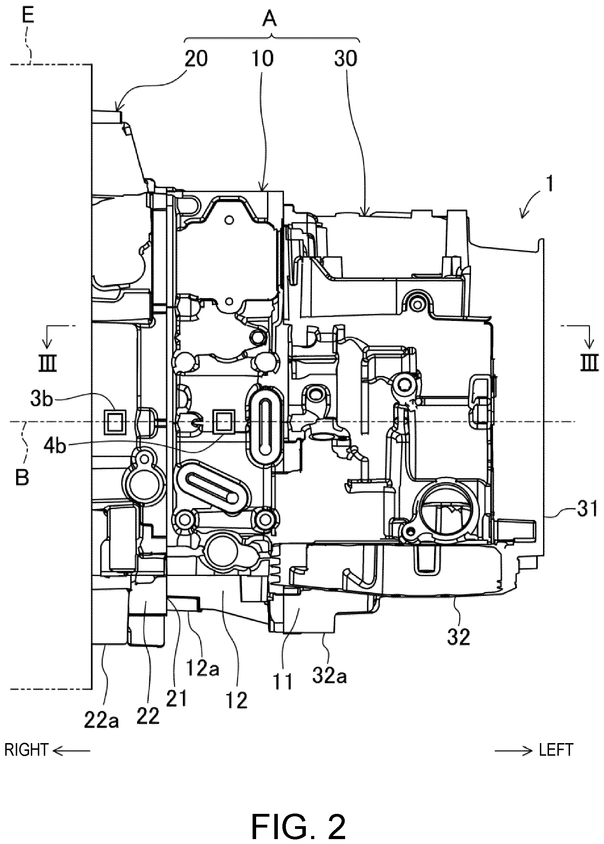

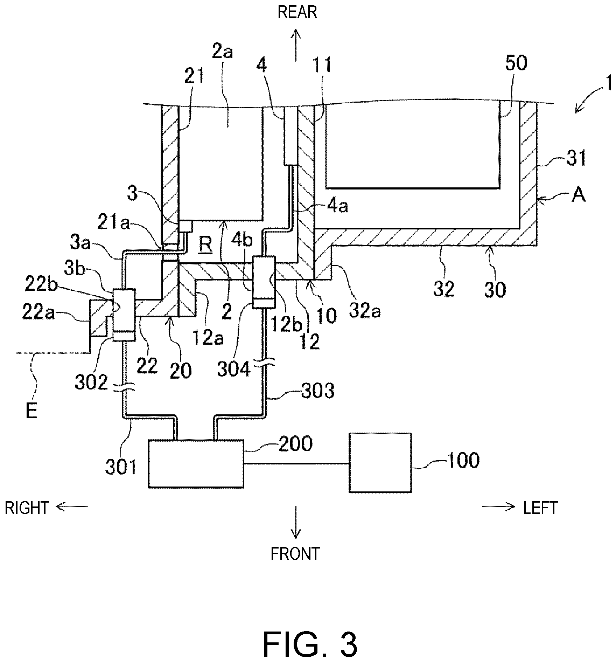

Figs. 1 and 2 illustrate a vehicle drive system 1 according to an embodiment of the present disclosure. The vehicle drive system 1 is installed in an automobile (not illustrated) and drives drive wheels of the automobile. The automobile may be an electric vehicle which runs solely on power of a motor or a hybrid vehicle which uses both an internal combustion engine (engine) and the motor. The motor for generating the power to drive the drive wheels is a drive motor. The hybrid automobile may be a plug-in hybrid which is chargeable from an external power source. In this embodiment, the explanation is given for a case where a vehicle on which the vehicle drive system 1 is installed is the hybrid vehicle. Therefore, as illustrated in Fig. 3, although the automobile on which the vehicle drive system 1 is installed is also equipped with a drive battery 100 which supplies power to a motor 2 and a controller 200 which controls the motor 2, since they are conventionally well-known, the detailed description thereof is omitted. The controller 200 includes, for example, an inverter circuit.

The vehicle drive system 1 is mounted, for example, in an engine compartment of the automobile. The engine compartment may be located in a front or rear part of the automobile. Front, rear, left, and right directions are defined as illustrated in each drawing. That is, with reference to the state where the vehicle drive system 1 is mounted in the engine compartment of the automobile, the front side of the vehicle is simply referred to as "front," the rear side of the vehicle is simply referred to as "rear," the left side of the vehicle is simply referred to as "left," and the right side of the vehicle is simply referred to as "right." A left-and-right direction of the vehicle corresponds to a width direction of the vehicle. This definition of the directions is solely for the convenience in describing the embodiment and does not limit the present disclosure.

As partially illustrated by virtual lines in Fig. 2, an engine E is disposed inside the engine compartment, on the right side of the vehicle drive system 1. A crankshaft (not illustrated) of the engine E extends in the left-and-right direction, that is, the engine E is a so-called transverse engine. The engine E and the vehicle drive system 1 are arranged side by side in the left-and-right direction, the vehicle drive system 1 is disposed on the left side of the engine E, and a left part of the engine E is coupled to a right part of the vehicle drive system 1 by a fastening member (not illustrated). The power outputted from the crankshaft of the engine E is inputted to the vehicle drive system 1. Note that the left and right positional relationship may be reversed, and the arranged direction of the engine E and the vehicle drive system 1 is not particularly restricted. In the case of an electric vehicle, since the engine E is not installed, the engine compartment is referred to as a motor compartment.

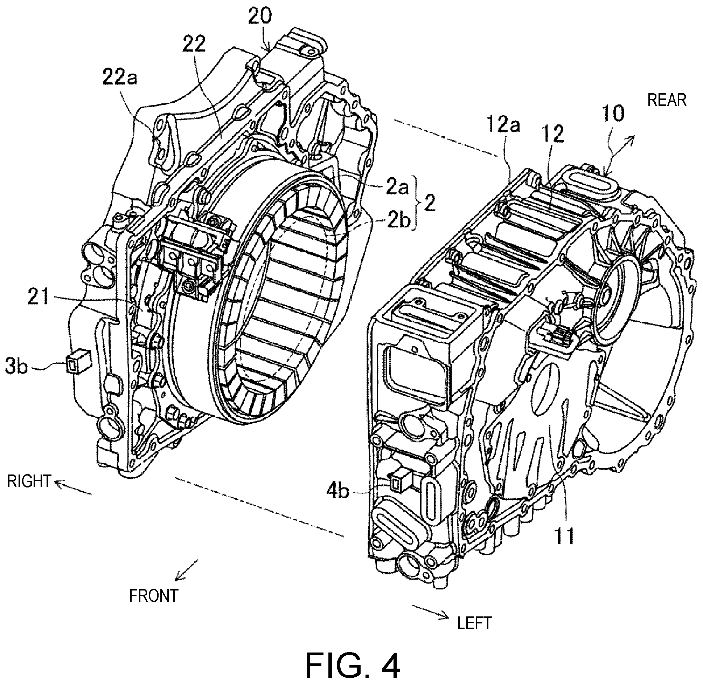

Fig. 3 schematically illustrates a cross section of the vehicle drive system 1. As illustrated in Fig. 3, the vehicle drive system 1 includes the motor 2, a temperature sensor 3 which detects a temperature of the motor 2, and a resolver 4 which detects a rotational state of the motor 2. As illustrated in Fig. 4, the motor 2 includes a stator 2a and a rotor 2b (only an outer circumference thereof is partially illustrated by a virtual line). The core of a rotation shaft of the motor 2 (motor rotation shaft) is denoted by a reference character B in Fig. 2. A mounting direction of the vehicle drive system 1 in the vehicle is set so that a motor rotation shaft direction aligns with the left-and-right direction. Therefore, an axis core direction of the crankshaft of the engine E matches the motor rotation shaft direction.

The temperature sensor 3 is, for example, comprised of a thermistor and is disposed close to the stator 2a of the motor 2 in order to immediately detect a temperature change in the stator 2a. The temperature sensor 3 constantly outputs a detection signal. The resolver 4 is a rotational angle detection sensor which detects a rotational angle of the rotor 2b. The temperature sensor 3 and the resolver 4 may be of any commonly known type.

The vehicle drive system 1 also includes a motor housing 10, a right cover member 20, and a left cover member 30. The motor housing 10, the right cover member 20, and the left cover member 30 are each made of lightweight alloy, such as an aluminum alloy, providing high rigidity. Although in this embodiment the right and left cover members 20 and 30 are named this way since they are disposed on the respective right and left sides, without limiting to this, the right cover member 20 may be referred to as a front cover member and the left cover member 30 as a rear cover member. The right cover member 20 is a first cover member, and the left cover member 30 is a second cover member.

The motor housing 10, the right cover member 20, and the left cover member 30 form a single case A. The right cover member 20 is positioned on the right side of the case A to constitute a right part of the case A, and thus may also be referred to as a "right-side component." The left cover member 30 is positioned on the left side of the case A to constitute a left part of the case A, and thus may also be referred to as a "left-side component." The motor housing 10 is positioned between the right and left cover members 20 and 30 to constitute an intermediate part of the case A in the left-and-right direction, and thus may also be referred to as an "intermediate component." The motor housing 10 is sandwiched in the left-and-right direction by the right and left cover members 20 and 30. The structure of the case A is not limited to the above structure and may include additional component(s).

The motor housing 10 forms a single accommodation space R (illustrated in Fig. 3). The motor 2, the temperature sensor 3, and the resolver 4 are accommodated inside the single accommodation space R. The motor housing 10 includes a housing-side vertical wall part 11 and a housing-side circumferential wall part 12, which are integrally molded. The housing-side vertical wall part 11 is positioned at a left end part of the motor housing 10 and is an end wall part extending in a radial direction (up-and-down and front-and-rear directions) of the motor rotation shaft. The housing-side circumferential wall part 12 projects rightward along the motor rotation shaft direction from a circumferential edge portion of the housing-side vertical wall part 11 and extends continuously in a circumferential direction of the motor rotation shaft to form an annular wall part. In a tip end portion (right end portion) of the housing-side circumferential wall part 12, a housing-side fastening portion 12a protruding radially outward is formed. The housing-side fastening portion 12a is joined to the right cover member 20 by a fastening member (not illustrated).

The motor 2 is positioned inside the housing-side circumferential wall part 12. An output combining mechanism (not illustrated) for combining the output of the engine E with the output of the motor 2 (rotational force of the rotor 2b) is provided inside the rotor 2b (illustrated by virtual lines in Fig. 4). The output combining mechanism is capable of inputting only the output of the engine E, only the output of the motor 2, or a combination of the outputs of the engine E and the motor 2 at an arbitrary ratio, to a subsequent transmission 50 (illustrated in Fig. 3). The structure of the output combining mechanism is not particularly limited and may apply a conventionally well-known mechanism used in hybrid vehicles. The control of the output combining mechanism may also use a conventionally well-known method.

The housing-side vertical wall part 11 is located in the left end part of the motor housing 10, as the end wall part. However, since no end wall part is formed in the right end part of the motor housing 10, the motor housing 10 has a structure where it has an opening formed in the right direction (one side in the motor rotation shaft direction). Since the accommodation space R opens in the right direction of the motor housing 10, the opening of the motor housing 10 is covered by the right cover member 20 from the right side.

The right cover member 20 includes a right cover-side vertical wall part 21 and a right cover-side circumferential wall part 22, which are integrally molded. The right cover-side vertical wall part 21 is an end wall part located in a left end part of the right cover member 20 and extending in the radial direction (up-and-down and front-and-rear directions) of the motor rotation shaft to cover the opening of the motor housing 10. The housing-side fastening portion 12a is joined to the right cover-side vertical wall part 21 to close the opening of the motor housing 10.

The right cover-side circumferential wall part 22 projects from a circumferential edge portion of the right cover-side vertical wall part 21 in the motor rotation shaft direction and extends continuously in the circumferential direction of the motor rotation shaft to form an annular wall part. In a tip end portion (right end portion) of the right cover-side circumferential wall part 22, a right cover-side fastening portion 22a protruding radially outward is formed. The right cover-side fastening portion 22a is connected to the engine E by a fastening member (not illustrated).

The left cover member 30 is attached to the motor housing 10 at the opposite side (left side) from the opening and includes a left cover-side vertical wall part 31 and a left cover-side circumferential wall part 32, which are integrally molded. The left cover-side vertical wall part 31 is an end wall part located in a left end part of the left cover member 30 and extending in the radial direction (up-and-down and front-and-rear directions) of the motor rotation shaft.

The left cover-side circumferential wall part 32 projects from a circumferential edge portion of the left cover-side vertical wall part 31 in the motor rotation shaft direction and extends continuously in the circumferential direction of the motor rotation shaft to form an annular wall part. In a tip end portion (right end portion) of the left cover-side circumferential wall part 32, a left cover-side fastening portion 32a protruding radially outward is formed. The left cover-side fastening portion 32a is coupled to the housing-side vertical wall part 11 of the motor housing 10 by a fastening member (not illustrated).

The transmission 50 is accommodated inside the left cover-side circumferential wall part 32. The rotational force outputted from the output combining mechanism accommodated in the motor housing 10 is inputted to the transmission 50 to be decelerated or accelerated and then be outputted. The output of the transmission 50 is transmitted to the drive wheels via a final gear and a drive shaft (not illustrated).

The temperature sensor 3 and the resolver 4 are spaced apart in the motor rotation shaft direction. The temperature sensor 3 is accommodated inside the motor housing 10 near the right cover-side vertical wall part 21 and, in this embodiment, is fixed by being fastened to the right cover-side vertical wall part 21. The resolver 4 is accommodated inside the motor housing 10 on the opposite side from the right cover-side vertical wall part 21 and is fixed by being fastened to the housing-side vertical wall part 11. Thus, the temperature sensor 3 is accommodated on the right side of the accommodation space R and the resolver 4 is accommodated on the left side of the accommodation space R.

The vehicle drive system 1 further includes a temperature sensor harness 3a connected at its base end part (first end part) to the temperature sensor 3, and a resolver harness 4a connected at its base end part (first end part) to the resolver 4. The temperature sensor harness 3a contains a signal line which transmits the detection signal of the temperature sensor 3 to the controller 200 located outside the case A. The resolver harness 4a contains a signal line which transmits the detection signal of the resolver 4 to the controller 200.

The right cover-side vertical wall part 21 of the right cover member 20 has a window 21a through which the temperature sensor harness 3a passes. The window 21a is located radially outward of the stator 2a in the right cover-side vertical wall part 21 and is formed to extend through the right cover-side vertical wall part 21 in the thickness direction (left-and-right direction). In this embodiment, the window 21a is located in a front portion of the right cover-side vertical wall part 21. The formation of the window 21a allows the temperature sensor harness 3a to be routed from the inside of the motor housing 10 to the inside of the right cover member 20. An inner surface of the window 21a and the temperature sensor harness 3a can be sealed therebetween with a sealing material.

A temperature sensor connector 3b is attached to the right cover-side circumferential wall part 22 of the right cover member 20. Specifically, a connector attachment hole 22b passing through the right cover-side circumferential wall part 22 in the thickness direction is formed in a front portion of the right cover-side circumferential wall part 22. The temperature sensor connector 3b is fixed to the right cover-side circumferential wall part 22 in a state inserted into the connector attachment hole 22b. In other words, the temperature sensor connector 3b is attached to the right cover-side circumferential wall part 22, which is separated from the window 21a, to pass therethrough.

A tip end part (second end part) of the temperature sensor harness 3a is connected to the temperature sensor connector 3b. The temperature sensor connector 3b is connectable to a first external harness 301. The side of the temperature sensor connector 3b connected to the first external harness 301 faces forward.

The first external harness 301 includes a signal line for transmitting the detection signal of the temperature sensor 3 to the controller 200. An end part of the first external harness 301 is equipped with a first connector 302 connected to the temperature sensor connector 3b. Since a front part of the temperature sensor connector 3b is connected to the first connector 302, a rear part of the first connector 302 is connected to the temperature sensor connector 3b. One of the temperature sensor connector 3b and the first connector 302 may be a female connector or a male connector.

For example, one of the temperature sensor connector 3b and the first connector 302 may have an insertion port to be a female connector, and the other one of the temperature sensor connector 3b and the first connector 302 may have an inserting part to be inserted into the insertion port, to be the male connector. For example, when the temperature sensor connector 3b has the insertion port, the arrangement of the temperature sensor connector 3b may be determined so that the insertion port faces forward. In this case, by inserting the inserting part, which is formed in the first connector 302, into the insertion port of the temperature sensor connector 3b from its front side, the first connector 302 can be connected to the temperature sensor connector 3b. Conversely, when the inserting part is formed in the temperature sensor connector 3b, the arrangement of the temperature sensor connector 3b may be determined so that the inserting part faces forward.

A resolver connector 4b configured such that a second external harness 303 is connectable is attached to the motor housing 10 to pass therethrough. Specifically, the housing-side circumferential wall part 12 has a connector attachment hole 12b extending through the housing-side circumferential wall part 12 in the thickness (radial) direction. The resolver connector 4b is fixed to the housing-side circumferential wall part 12 in a state where it is inserted into the connector attachment hole 12b. In other words, the resolver connector 4b is attached to the motor housing 10 to pass through a position thereof separated from the temperature sensor connector 3b in the left-and-right direction.

A tip end part (second end part) of the resolver harness 4a is connected to the resolver connector 4b. The resolver connector 4b is connectable to the second external harness 303. The side of the resolver connector 4b connected to the second external harness 303 faces forward. Thus, the side of the temperature sensor connector 3b where the first external harness 301 connects and the side of the resolver connector 4b where the second external harness 303 connects both face the same direction. These connection sides may alternatively face upward, downward, or rearward.

The second external harness 303 contains a signal line for transmitting the detection signal of the resolver 4 to the controller 200. A second connector 304 connected to the resolver connector 4b is provided in an end part of the second external harness 303. Since the second connector 304 is connected to a front part of the resolver connector 4b, a rear part of the second connector 304 is connected to the resolver connector 4b. Either of the resolver connector 4b and the second connector 304 may be the female or male connector. Similarly to the temperature sensor connector 3b and the first connector 302, for example, one of the resolver connector 4b and the second connector 304 may have an insertion port to be a female connector, and the other one of the resolver connector 4b and the second connector 304 may have an inserting part to be a male connector. The first external harness 301 and the second external harness 303 may be bundled into a single harness outside the case A.

### Operation and Effect(s) of Embodiment

As described above, according to this embodiment, since the temperature sensor 3 for detecting the temperature state of the motor 2 is provided inside the motor housing 10, the temperature state of the motor 2 may accurately be detected. The temperature sensor harness 3a connected to the temperature sensor 3 is connected to the temperature sensor connector 3b attached to the right cover member 20, while passing through the window 21a of the right cover member 20. Since the first external harness 301 is connected to the temperature sensor connector 3b, the detection signal from the temperature sensor 3 is inputted to the controller 200 via the temperature sensor harness 3a, the temperature sensor connector 3b, and the first external harness 301.

Further, the resolver harness 4a connected to the resolver 4 is connected to the resolver connector 4b attached to the motor housing 10. Since the second external harness 303 is connected to the resolver connector 4b, the detection signal of the resolver 4 can be inputted to the controller 200, for example, via the resolver harness 4a, the resolver connector 4b, and the second external harness 303.

Thus, by providing the temperature sensor connector 3b and the resolver connector 4b, it becomes possible to input the detection signals of the temperature sensor 3 and the resolver 4 to the controller 200 without adopting the hollow shaft structure as in the conventional example. Further, since the temperature sensor connector 3b and the resolver connector 4b penetrate the right cover member 20 and the motor housing 10, respectively, the connectors 3b and 4b and the harnesses 3a and 4a are not locally concentrated, making it easier to facilitate layout, as compared to a case where the connectors 3b and 4b are attached through a single member. Furthermore, there is no need to form through-hole(s) in the left cover member 30 for the connectors 3b and 4b.

The above embodiment is merely illustrative in every aspect and must not be interpreted restrictively. Moreover, any modifications and/or changes within the scope of equivalency of the appended claims are within the scope of the present disclosure.

### Industrial Applicability

As described above, the vehicle drive system according to the present disclosure can be used in hybrid automobiles or electric automobiles, for example.

### DESCRIPTION OF REFERENCE CHARACTERS

- 1: Vehicle Drive System
- 2: Motor
- 3: Temperature Sensor
- 3a: Temperature Sensor Harness
- 3b: Temperature Sensor Connector
- 4: Resolver
- 4a: Resolver Harness
- 4b: Resolver Connector
- 10: Motor Housing
- 20: Right Cover Member
- 21: Right Cover-side Vertical Wall Part
- 21a: Window
- 22: Right Cover-side Circumferential Wall Part
- 301: First External Harness
- 303: Second External Harness

## Claims

1. A vehicle drive system including a motor (2), a temperature sensor (3) configured to detect a temperature state of the motor (2), and a resolver (4) configured to detect a rotational state of the motor (2), further comprising:
a motor housing (10) accommodating the motor (2), the temperature sensor (3), and the resolver (4), and being open at one side in an axial direction of a motor rotation shaft;
a cover member (20) covering the opening of the motor housing (10) from the one side;
a temperature sensor harness (3a) connected at a first end part thereof to the temperature sensor (3); and
a resolver harness (4a) connected at a first end part thereof to the resolver (4),
wherein the cover member (20) has a window (21a) through which the temperature sensor harness (3a) passes, and a temperature sensor connector (3b) connectable to a first external harness (301) is attached to the cover member (20) to penetrate a part of the cover member (20) separated from the window (21a),
wherein the temperature sensor connector (3b) is connected to a second end part of the temperature sensor harness (3a),
wherein a resolver connector (4b) connectable to a second external harness (303) is attached to the motor housing (10) to penetrate the motor housing (10), and
wherein the resolver connector (4b) is connected to a second end part of the resolver harness (4a).

2. The vehicle drive system of claim 1, wherein the cover member (20) includes a cover-side vertical wall part (21) extending in a radial direction of the motor rotation shaft to cover the opening of the motor housing (10), and a cover-side circumferential wall part (22) projecting in the axial direction of the motor rotation shaft from a circumferential edge portion of the cover-side vertical wall part (21) to extend annularly,
wherein the window (21a) is formed in the cover-side vertical wall part (21), and
wherein the temperature sensor connector (3b) is attached to the cover-side circumferential wall part (22) to penetrate the cover-side circumferential wall part (22).

3. The vehicle drive system of claim 2, wherein the temperature sensor (3) and the resolver (4) are disposed away from each other in the axial direction of the motor rotation shaft.

4. The vehicle drive system of claim 3, wherein the temperature sensor (3) is accommodated inside the motor housing (10) on a side closer to the cover-side vertical wall part (21).

5. The vehicle drive system of claim 4, wherein the resolver (4) is accommodated inside the motor housing (10) on an opposite side from the cover-side vertical wall part (21).

6. The vehicle drive system of claim 5, wherein the motor housing (10) has a housing-side vertical wall part (11) extending in the radial direction of the motor rotation shaft, and a housing-side circumferential wall part (12) projecting in the axial direction of the motor rotation shaft from a circumferential edge portion of the housing-side vertical wall part (11) to extend annularly, and coupled to the cover member (20), and
wherein the resolver connector (4b) is attached to the housing-side circumferential wall part (12) to penetrate the housing-side circumferential wall part (12).

7. The vehicle drive system of claim 6, wherein a side of the temperature sensor connector (3b) to which the first external harness (301) is connected faces the same direction as a side of the resolver connector (4b) to which the second external harness (303) is connected.

8. The vehicle drive system of claim 1, wherein the temperature sensor (3) and the resolver (4) are disposed away from each other in the axial direction of the motor rotation shaft.

9. The vehicle drive system of claim 8, wherein the temperature sensor (3) is accommodated inside the motor housing (10) on a side closer to the cover-side vertical wall part (21).

10. The vehicle drive system of claim 9, wherein the resolver (4) is accommodated inside the motor housing (10) on an opposite side from the cover-side vertical wall part (21).

11. The vehicle drive system of claim 10, wherein the motor housing (10) has a housing-side vertical wall part (11) extending in the radial direction of the motor rotation shaft, and a housing-side circumferential wall part (12) projecting in the axial direction of the motor rotation shaft from a circumferential edge portion of the housing-side vertical wall part (11) to extend annularly, and coupled to the cover member (20), and
wherein the resolver connector (4b) is attached to the housing-side circumferential wall part (12) to penetrate the housing-side circumferential wall part (12).

12. The vehicle drive system of claim 11, wherein a side of the temperature sensor connector (3b) to which the first external harness (301) is connected faces the same direction as a side of the resolver connector (4b) to which the second external harness (303) is connected.
